# NEUE EUROPÄISCHE PATENTSCHRIFT

(11) **EP 1 650 715 B2**
(45) Veröffentlichungstag und Bekanntmachung des Hinweises auf die Entscheidung über den Einspruch: **16.11.2011**
(45) Hinweis auf die Patenterteilung: 21.11.2007
(21) Anmeldenummer: 05017087.7
(22) Anmeldetag: 05.08.2005
(51) Int. Cl.: G07C 5/12, A01D 41/127, A01F 15/08

(54) **Skalierbare Funktionsfenster innerhalb einer Anzeigeeinheit**
Scalable function window in a display unit
Fenêtre de function échelonnable dans une unité d'affichage

(30) Priorität: 30.09.2004 DE 102004048083
(43) Veröffentlichungstag der Anmeldung: 26.04.2006
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE)

(56) Entgegenhaltungen:
- EP-A- 0 416 171
- DE-A1- 10 147 733
- DE-A1- 10 203 370
- DE-C1- 4 341 834
- US-A- 6 061 618
- US-A1- 2003 066 277
- US-A1- 2004 145 534
- US-B1- 6 282 476
- Arbeitspapier 196 aus dem Jahre 1993

## Beschreibung

Die Erfindung betrifft die Skalierbarkeit von Funktionsfenstern, die in einer Anzeigeeinheit eines in einer landwirtschaftlichen Arbeitsmaschine integrierten Terminals dargestellt werden gemäß dem Oberbegriff des Anspruchs 1.

In der DE 198 05 133 A1 wird eine elektronische Anzeige- und/oder Bedienvorrichtung mit einem Display und Zustandsanzeigefeldern offenbart, wobei durch die Verwendung bestimmter Symbole dasselbe Anzeigefeld sowohl den Betriebs- als auch den Außerbetriebszustand unterschiedlicher Arbeitsaggregate anzeigt. Erfindungsgemäß wird der Außerbetriebszustand eines Arbeitsaggregates beispielsweise durch das Symbol eines das jeweilige Arbeitsaggregat durchstreichenden Striches, der sich über das vorhandene Symbol legt, angezeigt. Hingegen wird der Betriebszustand eines Arbeitsaggregates zum Beispiel durch das Einschalten einer dem vorhandenen Symbol zugeordneten Leuchtanzeige kenntlich gemacht. Auf diese Weise werden keine zusätzlichen Symbole zur Anzeige des Betriebs- und Außerbetriebszustandes verwendet, die den auf dem Display zur Verfügung stehenden Platz einschränken würden. In der US 6282476-B1 wird auch eine solche landwirtschaftliche Arbeitsmaschine, mit allen Merkmalen aus dem Oberbegriff vom Anspruch 1, offenbart.

Nachteilig an einer derartigen Anzeigestruktur ist, dass der Fahrer der landwirtschaftlichen Arbeitsmaschine hinsichtlich der dargestellten Informationen ausschließlich auf den Betriebs- oder Außerbetriebszustand der abgebildeten Arbeitsaggregate beschränkt ist. Ein zusätzlicher Informationsfluss, wie etwa durch das Hinzutreten weiterer Änzeigefelder, ist nicht möglich.

Es ist daher Aufgabe der zugrundeliegenden Erfindung eine Anzeigeeinheit mit einer Vielzahl unterschiedlicher Funktionsfenster zu schaffen, so dass der Fahrer der landwirtschaftlichen Arbeitsmaschine eine dauerhafte und uneingeschränkte Übersicht über alle in den Funktionsfenstern hinterlegten Informationen hat.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem das Öffnen mindestens eines weiteren Funktionsfensters zur Skalierung eines geöffneten Fensters führt, indem die Basisanzeigefläche derart skaliert wird, dass um die Basisanzeigefläche herum zumindest teilweise ein Freiraum für zusätzliche Funktionsfenster geschaffen wird, hat der Fahrer der landwirtschaftlichen Arbeitsmaschine die Möglichkeit eine Vielzahl unterschiedlicher, durch die Funktionsfenster visualisierter Informationen einzusehen, ohne dass der Fahrer die bestehende Basisanzeigefläche verändern oder verlassen muss.

In vorteilhafter Weiterbildung der Erfindung wird das Öffnen eines weiteren Funktionsfensters und die hierdurch herbeigeführte Skalierung eines geöffneten Funktionsfensters ohne Informationsverlust vollzogen, so dass der Fahrer der landwirtschaftlichen Arbeitsmaschine trotz zusätzlichem Informationszuwachses nicht auf bestehende und durch die bereits geöffneten Funktionsfenster visualisierte Informationen verzichten muss.

Durch die dynamische Skalierung eines Funktionsfensters wird stets die komplette Anzeigeeinheit des Terminals mit den vorhandenen Funktionsfenstern ausgefüllt, ohne dass unnötige Lücken entstehen und eine dauerhafte Übersichtlichkeit gewährleistet wird.

Die Festlegung einer Minimalgröße gewährleistet, dass die Skalierung nicht zu einer Unleserlichkeit der durch die Funktionsfenster zur Verfügung gestellten Daten führt.

Indem das Schließen eines Funktionsfensters zur Vergrößerung wenigstens eines geöffneten Funktionsfensters führt, wird die Übersichtlichkeit der angezeigten Funktionsfenster verbessert.
Eine vorteilhafte Ausführung bietet eine selbsttätige Skalierung eines Funktionsfensters in Abhängigkeit von dem Überschreiten eines dem jeweiligen Funktionsfenster zugeordneten und festgelegten Schwellwertes. Erst ab Erreichen dieses Schwellwertes werden die in dem Funktionsfenster enthaltenen Informationen relevant und werden dem Fahrer durch eine Vergrößerung deutlich sichtbar gemacht.

Im Gegensatz hierzu ist eine selbsttätige Skalierung wenigstens eines Funktionsfensters bei Unterschreiten eines dem Funktionsfenster zugeordneten und festgelegten Schwellwertes von Vorteil, da die Werte unterhalb dieses Schwellwertes von nachgeordneter Bedeutung sind und daher verkleinert dargestellt werden können, ohne dass dem Fahrer hierdurch ein Nachteil bzw. eine Informationslücke erwächst.

Die Schwellwerte können maschinenspezifische, erntegutspezifische Werte und/oder den Skalierfaktor für die Funktionsfenster- umfassen. Auf diese Weise werden alle relevanten Daten und Faktoren bei einem Skaliervorgang berücksichtigt um einen optimalen Informationsfluss zu gewährleisten.

Ein besonders wichtiger Schwellwert nimmt hierbei der kritische Arbeitszustand eines Arbeitsaggregates ein. Sollte beispielsweise der Motor unmittelbar vor einer Überlastung stehen, würde dies dem Fahrer der landwirtschaftlichen Arbeitsmaschine angezeigt werden, so dass er rechtzeitig mit der Einleitung von Gegenmaßnahmen beginnen kann.

Dadurch, dass die in den Funktionsfenstern hinterlegten Maschinen- und/oder Erntegutparameter ansteuerbar sind, hat der Fahrer die Möglichkeit jederzeit die entsprechenden Funktionsfenster anzuwählen und Einstellungen an den angesteuerten Parametern vorzunehmen, ohne dass der Informationsfluss beeinträchtigt wird.

Zur besseren Übersichtlichkeit sind die Funktionsfenster in unterschiedliche Arbeitsgruppen unterteilt. Hierdurch wird dem Fahrer die Suche auf dem Anzeigeeinheit nach zusammenhängenden Maschinen- oder Erntegutparametern erspart, was einer verbesserten Übersichtlichkeit dient.

Indem das Skalieren, Öffnen und/oder Schließen der Funktionsfenster arbeitgruppenabhängig erfolgt, werden die wesentlichen Maschinen- und Erntegutparameter, die der jeweiligen Arbeitsgruppe zugeordnet sind, zusammenhängend dargestellt, wodurch die genutzte Fläche der Anzeigeeinheit den aktuellen Anzeigeanforderungen angepasst wird und nur die relevantesten Arbeitsgruppen die größte Fläche der Anzeigeeinheit einnehmen.

Dadurch, dass der Skaliervorgang, das Öffnen und/oder das Schließen selbsttätig oder manuell erfolgt, wird der Fahrer entlastet und seine Aufmerksamkeit wird stets auf die relevanten Funktionsfenster gerichtet.
Ferner wird ein wesentlicher Vorteil erreicht, indem die einer Vielzahl von Arbeitsaggregaten zugeordnete Vielzahl von Anzeigeeinheiten in einer gemeinsamen Anzeigeeinheit dargestellt werden. Hierdurch werden unter Verwendung einer einzigen Anzeigeeinheit die Informationen einer Vielzahl von Arbeitsaggregate zusammengeführt, so dass der Fahrer der landwirtschaftlichen Arbeitsmaschine gleichzeitig einen einheitlichen Überblick über sämtliche Informationen unterschiedlicher Arbeitsaggregate hat. Außerdem wird kostensparend keine weitere Anzeigeeinheit für das zusätzliche Arbeitsaggregat benötigt, welche darüber hinaus zusätzlichen Raum in der kleinen Fahrerkabine beanspruchen würde.

Die Übersichtlichkeit der Anzeigeeinheit wird außerdem verbessert, indem die Funktionsfenster als ein- und ausblendbare sowie nicht ein- und ausblendbare Funktionsfenster ausgeführt sind.
Im Rahmen der Erfindung sind unter nicht ein- und ausblendbaren Funktionsfenstern solche Funktionsfenster zu verstehen, die dauerhaft und in ihrer Größe veränderbar auf der Anzeigeeinheit dargestellt werden.
Hingegen können die ein- und ausblendbaren Funktionsfenster komplett aus der Anzeigeeinheit ausgeblendet und im Bedarfsfall wieder eingeblendet werden. Hierbei bietet sich an, den wesentlichen und notwendigerweise einzusehenden Informationen nicht ein- und ausblendbare Funktionsfenster und Informationen von untergeordneter Relevanz ein- und ausblendbare Funktionsfenster zuzuordnen.

Indem das wenigstens eine Funktionsfenster in Abhängigkeit von an sich bekannten Maschinen- und/oder Erntegutparametern ein- und ausgeblendet wird, wird der Fahrer automatisch unmittelbar auf relevante Maschinen- oder Erntegutparameter aufmerksam gemacht.

Das selbsttätige Ein- und Ausblenden entlastet den Fahrer und gewährleistet eine sichere Informationsversorgung.

Weitere vorteilhafte Ausgestaltungen sind Gegenstand weiterer Unteransprüche und werden nachfolgend anhand von Zeichnungen näher erläutert.

Es zeigen:
- Figur 1:: einen schematischen Querschnitt durch eine als Mähdrescher ausgeführte landwirtschaftliche Arbeitsmaschine und deren Arbeitsaggregate
- Figur 2:: eine in einer Anzeigeeinheit dargestellte Basisanzeigefläche
- Figur 3:: eine Basisanzeigefläche nach Figur 2 in skalierter Form
- Figur 4:: eine skalierte Basisanzeigefläche nach Figur 3 mit zusätzlich eingeblendeten Funktionsfenstern
- Figur 5:: ein Schlepper mit adaptierter landwirtschaftlicher Ballenpresse und erfindungsgemäßer Anzeigeeinheit

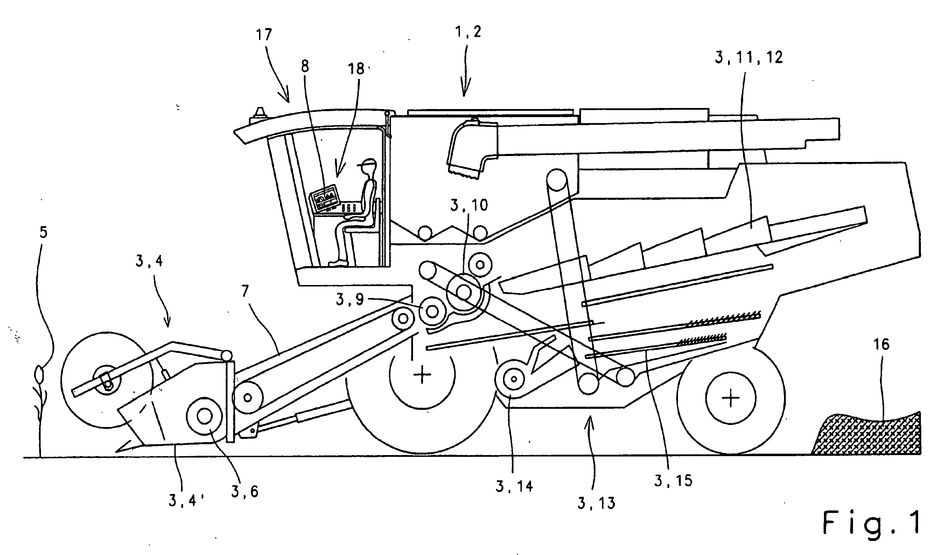

Figur 1 zeigt eine als Mähdrescher 2 ausgeführte landwirtschaftliche Arbeitsmaschine 1 und deren unterschiedliche Arbeitsaggregate 3. In dem frontseitigen Bereich des Mähdreschers 2 ist ein Schneidwerk 4 angeordnet, welches das Erntegut 5 aufnimmt, schneidet und es mittels eines Förderorgans 6 an den nachgeordneten Schrägförderer 7 übergibt. Über den Schrägförderer 7 wird das Erntegut 5 in an sich bekannter Weise an die Dreschorgane, die vorliegend aus einer ersten Dreschtrommel 9 und einer dieser nachgeordneten zweiten Dreschtrommel 10 bestehen, übergeben.
Zur weiteren Abscheidung der Körner wird der Gutstrom an unterschiedliche Trenneinrichtungen 11, wie beispielsweise Hordenschüttler 12, sowie an unterschiedliche Reinigungseinrichtungen 13, die im Wesentlichen aus einem Gebläse 14 und Reinigungssieben 15 bestehen, gefördert, bevor das Stroh aus dem rückwärtigen Bereich des Mähdreschers 2 heraus gefördert und auf dem Feldboden zu einem Schwad 16 abgelegt wird.
Über ein in der Kabine 17 angeordnetes Terminal 18 kann der Fahrer des Mähdreschers 2 die Einstellungen der unterschiedlichen Arbeitsaggregate 3 wie beispielsweise die Schnittbreite des Schneidwerks 4, Dreschtrommeldrehzahl oder Sieböffnungsweite, vornehmen und auf diese Weise die Erntefahrt den spezifischen Erntegutbedingungen anpassen.
Darüber hinaus hat der Fahrer des Mähdreschers 2 stets einen aktuellen Überblick über die auf der Anzeigeeinheit 8 eines in der Kabine 17 angeordneten Terminals 18 visualisierten Maschinen- oder Erntegutdaten.
Die Einstellung der Arbeitsaggregate 3 sowie der Überblick über die aktuellen Maschinen- und Erntegutdaten ist von wesentlicher Bedeutung, da in Abhängigkeit von diesen Parametern insbesondere der Körnerverlust, der bei jeder Erntefahrt auftritt, festgestellt und durch Korrektur dieser Parameter erheblich reduziert werden kann.

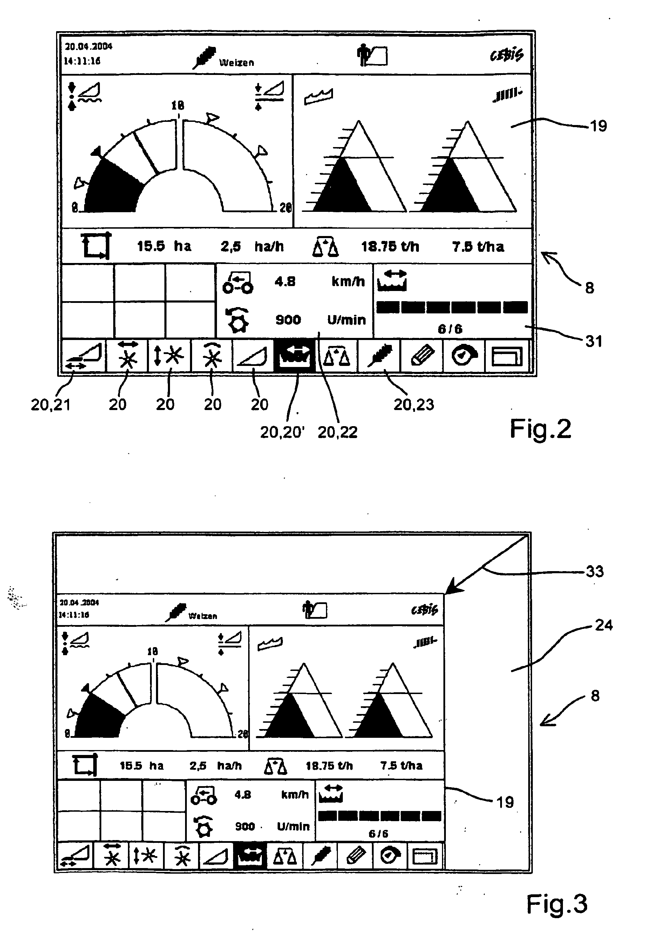

In Figur 2 ist einer Anzeigeeinheit 8 dargestellte Basisanzeigefläche 19 beispielhaft abgebildet. Auf der Anzeigeeinheit 8 sind verschiedene Funktionsfenster 20 angeordnet, wobei die dargestellten Funktionsfenster 20 erweiterbar und nicht abschließend sind. Im vorliegenden Ausführungsbeispiel wird durch das Anwählen eines Funktionsfensters 20 das angewählte Funktionsfenster 20 andersfarbig hinterlegt und in einem vergrößerten Funktionsfenster 31 dargestellt. In diesem Funktionsfenster 31 werden sämtliche Informationen bzw. Funktionen unterschiedlicher Maschinen- und/oder Erntegutparameter, die in dem angewählten Funktionsfenster 20' hinterlegt sind, angezeigt und können von dem Fahrer des Mähdreschers 2 angesteuert und verändert werden. Beispielsweise zeigt das Funktionsfenster 21 die Stellung des Schneidwerkstisches 4' an. In dem Funktionsfenster 22 kann die Fahrgeschwindigkeit des Mähdreschers 2 und die Dreschtrommeldrehzahl abgelesen werden. Ein weiteres Funktionsfenster 23 lässt die zu bearbeitende Erntegutart erkennen.
Die dargestellten Funktionsfenster 20 füllen die komplette Anzeigeeinheit 8 des Terminals 18 aus, so dass weitere Funktionsfenster 20 nicht auf der Anzeigeeinheit 8 visualisiert werden. Der Fahrer des Mähdreschers 2 hat somit ausschließlich Überblick über die aktuell abgebildeten Funktionsfenster 20, obgleich das Terminal 18 für den Fahrer in weiteren Funktionsfenstern 20 relevante Informationen bereit stellt. Zwar werden diese Informationen inhaltlich in den entsprechenden unterdrückten und deshalb nicht visualisierten Funktionsfenstern 20 hinterlegt und sind jederzeit abrufbar, jedoch kann der Fahrer die in den unterdrückten Funktionsfenstern 20 hinterlegten Informationen nicht einsehen, so dass sich die nicht dargestellten Maschinen- oder Erntegutparameter nachteilig verändern können, ohne vom Fahrer rechtzeitig erkannt zu werden.

Um den Fahrer der landwirtschaftlichen Arbeitsmaschine 1 einen Überblick über alle wesentlichen und in den Funktionsfenstern 20 hinterlegten maschinen- und erntegutspezifischen Parameter zu verschaffen, wird gemäß Figur 3 die in Figur 2 dargestellte Basisanzeigefläche 19 in Pfeilrichtung 33 skaliert, so dass um die Basisanzeigefläche 19 herum, zumindest teilweise, ein Freiraum 24 für zusätzliche Funktionsfenster 20 geschaffen wird.

Es ist aber auch denkbar die Skalierung in beliebigen Richtungen vorzunehmen oder die skalierte Basisanzeigefläche 19 mittig in den Anzeigeeinheit 8 des Terminals 18 zu legen, so dass der Freiraum 24 die Anzeigeoberfläche 19 durchgehend umschließt.
Durch die Schaffung des Freiraums 24 wird Platz für die hinterlegten und zuvor von der Basisanzeigefläche 19 überlagerten Funktionsfenster 20 geschaffen. Die Summe sowie die Größe der Funktionsfenster 20 bestimmt dabei die Größe des erforderlichen Freiraums 24 und die Größe der skalierten Basisanzeigefläche 19.

Der Skaliervorgang setzt dabei immer dann ein, wenn zu dem aktuellen Ernteprozess weitere prozessrelevante Vorrichtungen oder Verfahren von dem Fahrer oder selbsttätig angewählt und infolgedessen eingeblendet werden. Diese weiteren Daten werden dann neben der Basisanzeigefläche 19 auf der Anzeigeeinheit 8 visualisiert, so dass dem Fahrer der landwirtschaftlichen Arbeitsmaschine 1 sämtliche relevanten Daten gleichzeitig und ohne Informationsverlust angezeigt werden.
Denkbar ist jedoch auch das Einsetzen des Skaliervorganges, in Abhängigkeit von Schwellwerten, wobei die Schwellwerte sowohl maschinenspezifische Parameter, wie beispielsweise die Dreschtrommeldrehzahl, oder aber erntegutspezifische Parameter umfassen können, wie beispielsweise Erntegutfeuchte. Außerdem kann der Schwellwert den Skalierfaktor für das jeweilige Funktionsfenster 20 selbst erfassen, um stets eine gute Übersichtlichkeit und Leserlichkeit zu gewährleisten.

In vorteilhafter Weiterbildung kann als Schwellwert der kritische Arbeitszustand zumindest eines Arbeitsaggregates 3 festgelegt werden, um Schäden innerhalb der landwirtschaftlichen Arbeitsmaschine 1 zu vermeiden. Hierbei bietet sich beispielsweise der Arbeitszustand des vorliegend nicht abgebildeten Motors der landwirtschaftlichen Arbeitsmaschine 1 an. Wird der Motor dauerhaft stark belastet und steht eine Überlastung des Motors unmittelbar bevor, wird dies dem Fahrer der landwirtschaftlichen Erntemaschine in einem entsprechenden Funktionsfenster 20 deutlich zur Anzeige gebracht, so dass er regulierend in den Erntebetrieb eingreifen kann, ohne dass es zu einem vollständigen Stillstand der landwirtschäftlichen Arbeitsmaschine 1 kommt.

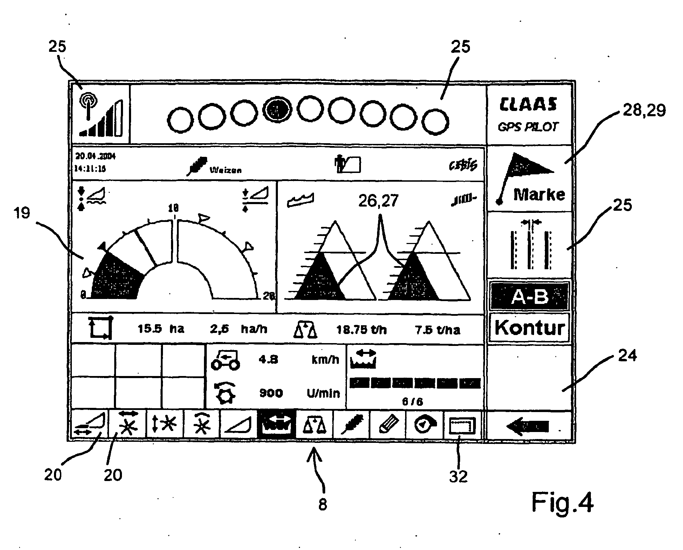

In der Figur 4 wird eine nach Figur 3 skalierte Basisanzeigefläche 19 mit zusätzlich in den Freiraum 24 eingeblendeten Funktionsfenstern 25 dargestellt.
Erfindungsgemäß führt das Öffnen wenigstens eines weiteren Funktionsfensters 25 zu der Skalierung der bereits geöffneten Funktionsfenster 20. Insbesondere führt das Öffnen eines weiteren Funktionsfensters 25 zu der Skalierung des bereits geöffneten Funktionsfensters 20, ohne dass Informationen verloren gehen. Dass heißt, wird ein weiteres Funktionsfenster 25 geöffnet, verringert sich der Freiraum 24 um die durch das Funktionsfenster 25 in Anspruch genommene Fläche, ohne jedoch die durch die Funktionsfenster 20 visualisierten Informationen zu unterdrücken oder die angezeigten Informationen unleserlich erscheinen zu lassen.

Damit der Fahrer des Mähdreschers 2 die in den Funktionsfenstern 20, 25 visualisierten Daten problemlos und leserlich erkennen kann wird die Minimalgröße eines Funktionsfensters 20, 25 begrenzt. Die Begrenzung der Minimalgröße eines Funktionsfensters 20 hat zudem den Vorteil, dass bei Ausfüllung des Freiraums 24 die skalierte Basisanzeigefläche 19 erneut skaliert wird, um einen größeren Freiraum 24 für weitere Funktionsfenster 25 zu schaffen.
In vorteilhafter Weise sollte der jeweilige Skaliervorgang dynamisch erfolgen, so dass stets die geeignetste und größte Darstellung der Funktionsfenster 20 ausgewählt wird.

Sollte sich ergeben, dass die landwirtschaftliche Arbeitsmaschine 1 eine so umfangreiche Menge an maschinen- und/oder erntegutspezifischen Funktionsfenstern 20, 25 zur Verfügung stellt, hat es sich als vorteilhaft erwiesen, die Funktionsfenster 20, 25 als ein- und ausblendbare sowie nicht ein- und ausblendbare Funktionsfenster 26, 28 auszulegen.
Die nicht ein- und ausblendbaren Funktionsfenster 26 sind in ihrer Größe veränderbar und werden dauerhaft auf der Anzeigeeinheit 8 des Terminals 18 dargestellt. Für diese Funktionsfenster 26 bieten sich insbesondere solche Funktionsfenster 20 an, die für den Fahrer des Mähdreschers 2 von besonderer Relevanz sind und die der Fahrer deshalb während des gesamten Erntebetriebs einsehen muss, wie beispielsweise die Körnerverlustanzeige 27. In vorteilhafter Weise können die nicht ein- und ausblendbaren Funktionsfenster 28 bei Überschreiten eines festgelegten Schwellwertes vergrößert und bei Unterschreiten eines festgelegten Schwellwertes verkleinert werden, damit die nicht ein- und ausblendbaren Funktionsfenster 28 stets auf der Basisanzeigefläche 19 für den Fahrer des Mähdreschers 2 einsehbar bleiben. Als Schwellwerte können an sich bekannte maschinen- und erntegutspezifische Parameter verwendet werden.

Hingegen sind die ein- und ausblendbaren Funktionsfenster 28 solche Funktionsfenster 28, die eine permanente Beobachtung durch den Fahrer der landwirtschaftlichen Arbeitsmaschine 1 nicht erforderlich machen. Deshalb können die ein- und ausblendbaren Funktionsfenster 28 in Abhängigkeit von an sich bekannten Maschinen- und/oder Erntegutparametern ein- und ausgeblendet werden.
Darüber hinaus liegt es im Rahmen der Erfindung das Ein- und Ausblenden der Funktionsfenster 28 in Abhängigkeit von dem Über- oder Unterschreiten eines auf die Parameter bezogenen Schwellwertes erfolgen zu lassen. Dass heißt, wird der relevante Schwellwert erreicht, wird das Funktionsfenster 28 eingeblendet. Wird dieser Schwellwert wieder unterschritten, blendet sich das Funktionsfenster 28 aus.
Als Ausführungsbeispiel für ein verstellbares Funktionsfenster 28 kann die Feldanzeige 29 für einen Mähdrescher 2 herangezogen werden.

Die Feldanzeige 29 dient zur Unterstützung der Feld- und Ertragskartierung und zeigt dem Fahrer des Mähdreschers 2 bestimmte Felddaten, wie beispielsweise Verunkrautung oder extreme Bodenunebenheiten auf einem bestimmten Feldstück eines zu bearbeitenden Feldes an. Bei Erreichen dieses Feldstückes wird das Funktionsfenster Feldanzeige 29 visualisiert auf der Anzeigeeinheit 8 dargestellt und dem Fahrer verbleibt genügend Zeit die notwendigen Maschineneinstellungen vorzunehmen, bevor das kritische Feldstück erreicht wird.
Nach dem Überqueren des kritischen Feldstückes kann das Funktionsfenster 29 wieder ausgeblendet werden, so dass hinreichend Freiraum für andere Funktionsfenster 20 geschaffen wird, die in den freigewordenen Raum eingeblendet werden können. Denkbar ist aber auch, dass die bereits eingeblendeten Funktionsfenster 20 zur besseren Darstellung vergrößert werden und die Freifläche wieder überdecken.

Ferner ist es vorteilhaft, die Funktionsfenster 20 in mehrere Arbeitsgruppen zusammenzufassen. Diese Arbeitsgruppen erfassen maschinen- oder erntegutspezifische Parameter. In einer erntegutspezifischen Arbeitsgruppe kann beispielsweise die Erntegutart, die Erntegutfeuchte und Erntegutdichte zusammengefasst werden. In einer maschinenspezifischen Arbeitsgruppe, bezogen auf den Mähdrescher 2 als landwirtschaftliche Arbeitsmaschine 1, kann z.B. die Querneigung des Schneidwerks 4, die Höhenverstellung des Schneidwerks 4 und der Parameter Schneidwerkstisch 4 'Ein- und Ausfahren, erfasst werden.
Die Bildung von mehrere Parameter einschließenden Arbeitsgruppen bietet die Möglichkeit der geordneten und damit besseren Übersicht für den Fahrer über die in den Funktionsfenstern 20 hinterlegten Parameter. Ferner fügt sich die Zusammenfassung mehrerer Arbeitsgruppen platzsparend in die Anzeigeeinheit ein. D.h. es können ganze Arbeitsgruppen einheitlich skaliert bzw. ein- und ausgeblendet werden, so dass auch hier die Darstellung auf der Anzeigeeinheit 8 übersichtlich und auf die relevantesten Funktionsfenster 20 beschränkt wird.

Zur Entlastung des Fahrers kann der Skaliervorgang wahlweise selbsttätig oder manuell erfolgen. So ist vorstellbar, dass die Skalierung eine Regelschleife durchläuft, die in Abhängigkeit von einem festgelegten Zeitfaktor oder aber in Abhängigkeit von einer definierten Reihenfolge der Anzeige von bestimmten Funktionsfenstern 20 festgelegt wird. Die manuelle Skalierung kann durch die Ansteuerung des Funktionsfensters "manuelles skalieren" 32 angesteuert werden und sollte dem Fahrer neben der selbsttätigen Skalierung jederzeit möglich sein, damit sich der Fahrer direkt eine Übersicht über die von ihm gewollten Informationen verschaffen kann, ohne auf die nächste Einblendung warten zu müssen.

In Bezug auf das in den Figuren 2 - 4 dargestellte Ausführungsbeispiel ist die selbsttätige Spurführung, die in den Funktionsfenstern 25 der Figur 4 abgebildet ist, eingeblendet. Die Hinzuschaltung der Spurführung hat die automatische Skalierung der in der Figur 2 abgebildeten Basisanzeigefläche 19 - gemäß Figur 3 - zur Folge, so dass sich die Funktionsfenster 25 , wie in der Figur 4 dargestellt, in den durch die Skalierung geschaffenen Freiraum 24 einfügen.

Unabhängig von den unterschiedlichen Skaliervorgängen bleiben die in den Funktionsfenstern 20 hinterlegten Funktionen dauerhaft ansteuerbar, so dass der Fahrer der landwirtschaftlichen Arbeitsmaschine 1 jederzeit Zugriff auf sämtliche Anwendungen hat und lenkend in den Erntebetrieb eingreifen kann.

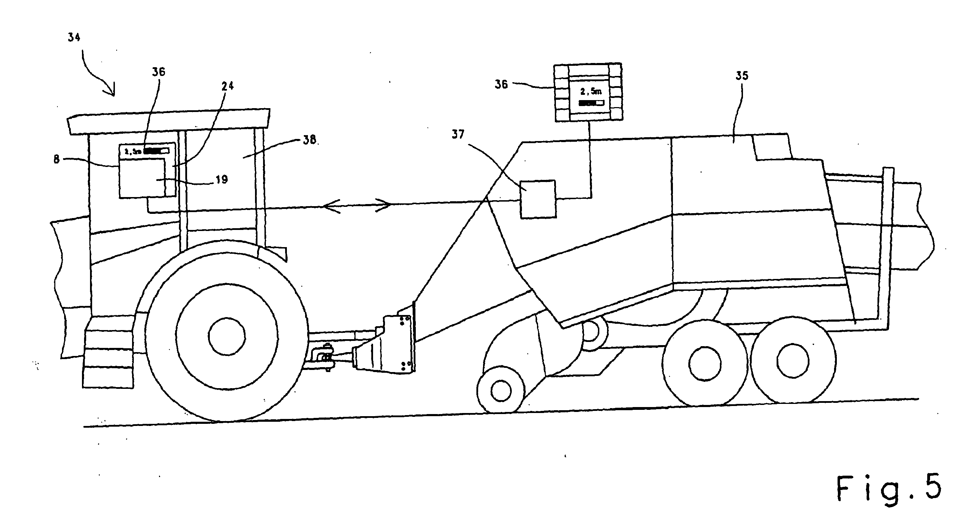

In der Figur 5 wird eine besondere Ausgestaltung der Erfindung abgebildet. Figur 5 zeigt einen Schlepper 34 mit einer adaptierten landwirtschaftlichen Ballenpresse 35 und erfindungsgemäßer Anzeigeeinheit 8. Dem Schlepper 34 ist die Anzeigeeinheit 8 und der landwirtschaftlichen Ballenpresse 36 ist eine separate Anzeigeeinheit 36 zugeordnet. In der Anzeigeeinheit 36 der Ballenpresse werden die Parameter der Ballenpresse 35, wie beispielsweise Ballenlänge oder Ballendichte dargestellt.
Um dem Fahrer des Schleppers 34 einen einheitlichen Überblick über alle relevanten maschinenspezifischen Informationen über den Schlepper 34, die Ballenpresse 36 sowie über erntegutspezifische Informationen zu gewährleisten, werden in erfindungsgemäßer Weise über eine an sich bekannte Steuerelektronik 37 die in der Anzeigeeinheit 36 der landwirtschaftlichen Ballenpresse 35 visualisierten Daten in einer in der Kabine 38 des Schleppers 34 angeordneten gemeinsamen Anzeigeeinheit 8 angezeigt. Dies erfolgt in der erfindungsgemäßen und zuvor beschriebenen Weise, indem die in der Anzeigeeinheit 36 enthaltenen Informationen in den Freiraum 24 der in der Kabine 38 des Schleppers 34 angeordneten gemeinsamen Anzeigeeinheit 8 übertragen werden. Infolgedessen wird die Basisanzeigefläche 19 der Anzeigeeinheit 8 mit den visualisierten schlepperspezifischen Informationen skaliert. Neben der besseren Übersichtlichkeit für den Fahrer des Schleppers 34 wird durch eine gemeinsame Anzeigeeinheit 8 eine weitere Anzeigeeinheit 8 innerhalb der Kabine 38 eingespart. Hierdurch reduzieren sich einerseits die Kosten und der innerhalb der Kabine zur Verfügung stehende Raum erfährt keine Einschränkung.

Besonders eignet sich die vorliegende Erfindung für ISOBUS - Systeme.

Es liegt im Rahmen der Erfindung eine Vielzahl von Arbeitsaggregaten 3 einer Vielzahl von Anzeigeeinheiten 8 zuzuordnen und die Vielzahl von Anzeigeeinheiten 8 in einer einzigen gemeinsamen Anzeigeeinheit 8 darzustellen.

Es obliegt dem Können eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung zu verlassen.

**Bezugszeichenliste:**
- 1: landwirtschaftliche Arbeitsmaschine
- 2: Mähdrescher
- 3: Arbeitsaggregat
- 4: Schneidwerk
- 4': Schneidwerkstisch
- 5: Erntegut
- 6: Förderorgan
- 7: Schrägförderer
- 8: Anzeigeeinheit
- 9: erste Dreschtrommel
- 10: zweite Dreschtrommel
- 11: Trenneinrichtung
- 12: Hordenschüttler
- 13: Reinigungseinrichtung
- 14: Gebläse
- 15: Reinigungssiebe
- 16: Schwad
- 17: Kabine
- 18: Terminal
- 19: Basisanzeigefläche
- 20: Funktionsfenster
- 20': angewähltes Funktionsfenster
- 21: Funktionsfenster
- 22: Funktionsfenster
- 23: Funktionsfenster
- 24: Freiraum
- 25: Funktionsfenster
- 26: nicht ein- und ausblendbares Funktionsfenster
- 27: Körnerverlustanzeige
- 28: ein- und ausblendbare Funktionsfenster

- 29: Feldanzeige
- 31: vergrößertes Funktionsfenster
- 32: Funktionsfenster "manuelles skalieren"
- 33: Pfeilrichtung
- 34: Schlepper
- 35: landwirtschaftliche Ballenpresse
- 36: Anzeigeeinheit
- 37: Steuerelektronik
- 38: Kabine

## Patentansprüche

1. Landwirtschaftliche Arbeitsmaschine (1, 2) mit wenigstens einem Arbeitsaggregat (3) und einer Fahrerkabine (17), in der über eine in zumindest einer Anzeigeeinheit (8) dargestellten elektronischen Basisanzeigefläche (19) mehrere in unterschiedlichen Funktionsfenstern angelegte Maschinen- und/oder Erntegutparameter visualisiert werden und wobei dem wenigstens einen Arbeitsaggregat (3) zumindest eine Anzeigeeinheit (8) zugeordnet ist,
**dadurch gekennzeichnet,**
**dass** das Öffnen wenigstens eines weiteren Funktionsfensters (25) zur Skalierung eines geöffneten Funktionsfensters (20) führt, indem die Basisanzeigefläche (19) derart skaliert wird, dass um die Basisanzeigefläche (19) herum zumindest teilweise ein Freiraum (24) für zusätzliche Funktionsfenster (25) geschaffen wird.

2. Landwirtschaftliche Arbeits- oder Erntemaschine nach Anspruch 1,
**dadurch gekennzeichnet, dass**
das Öffnen eines weiteren Funktionsfensters (25) und die Skalierung eines geöffneten Funktionsfensters (20) ohne Informationsverlust vollzogen wird.

3. Landwirtschaftliche Arbeits- oder Erntemaschine nach einem oder mehreren der vorangegangenen Ansprüche,
**dadurch gekennzeichnet, dass**
die Skalierung eines Funktionsfensters (20) dynamisch erfolgt.

4. Landwirtschaftliche Arbeits- oder Erntemaschine nach einem oder mehreren der vorangegangenen Ansprüche,
**dadurch gekennzeichnet, dass**
die Skalierung eines Funktionsfensters (20) auf eine Minimalgröße begrenzt wird.

5. Landwirtschaftliche Arbeits- oder Erntemaschine nach einem oder mehreren der vorangegangenen Ansprüche,
**dadurch gekennzeichnet, dass**
das Schließen eines weiteren Funktionsfensters (20) zur Vergrößerung wenigstens eines geöffneten Funktionsfensters (20) führt.

6. Landwirtschaftliche Arbeits- oder Erntemaschine nach einem oder mehreren der vorangegangenen Ansprüche,
**dadurch gekennzeichnet, dass**
sich das wenigstens eine Funktionsfenster (20) bei Überschreiten eines dem jeweiligen Funktionsfenster (20) zugeordneten und festgelegten Schwellwertes selbsttätig skaliert.

7. Landwirtschaftliche Arbeits- oder Erntemaschine nach einem oder mehreren der vorangegangenen Ansprüche,
**dadurch gekennzeichnet, dass**
sich das wenigstens eine Funktionsfenster (20) bei Unterschreiten eines dem jeweiligen Funktionsfenster (20) zugeordneten und festgelegten. Schwellwertes selbsttätig skaliert.

8. Landwirtschaftliche Arbeits- oder Erntemaschine nach Anspruch 6 und/oder 7,
**dadurch gekennzeichnet, dass**
die Schwellwerte maschinenspezifische, emtegutspezifische Werte und/oder den Skalierfaktor für die Funktionsfenster (20) umfassen.

9. Landwirtschaftliche Arbeits- oder Erntemaschine nach Anspruch 6 und/oder 7 und/oder 8,
**dadurch gekennzeichnet, dass**
ein Schwellwert der kritische Arbeitszustand zumindest eines Arbeitsaggregates (3) ist.

10. Landwirtschaftliche Arbeits- oder Erntemaschine nach einem oder mehreren der vorangegangenen Ansprüche,
**dadurch gekennzeichnet, dass**
die in den Funktionsfenstem (20) hinterlegten und an sich bekannten Maschinen- und/oder Erntegutparameter ansteuerbar sind,

11. Landwirtschaftliche Arbeits- oder Erntemaschine nach einem oder mehreren der vorangegangenen Ansprüche,
**dadurch gekennzeichnet, dass**
die Funktionsfenster (20) in Arbeitsgruppen unterteilt sind.

12. Landwirtschaftliche Arbeits- oder Erntemaschine nach Anspruch 11
**dadurch gekennzeichnet, dass**
die Arbeitsgruppen maschinen- oder emtegutspezifische Parameter erfassen.

13. Landwirtschaftliche Arbeits- oder Erntemaschine nach einem oder mehreren der vorangegangenen Ansprüche,
**dadurch gekennzeichnet, dass**
das Skalieren, Öffnen und/oder das Schließen der Funktionsfenster (20) arbeitsgruppenabhängig erfolgt.

14. Landwirtschaftliche Arbeits- oder Erntemaschine nach einem oder mehreren der vorangegangenen Ansprüche,
**dadurch gekennzeichnet, dass**
der Skaliervorgang, das Öffnen und/oder das Schließen selbsttätig oder manuell erfolgt.

15. Landwirtschaftliche Arbeits- oder Erntemaschine nach einem oder mehreren der vorangegangenen Ansprüche,
**dadurch gekennzeichnet, dass**
eine Vielzahl von Arbeitsaggregaten (3) einer Vielzahl von Anzeigeeinheiten (8) zugeordnet sind und die Vielzahl von Anzeigeeinheiten (8) in einer gemeinsamen Anzeigeeinheit (8) dargestellt werden.

16. Landwirtschaftliche Arbeitsmaschine nach einem oder mehreren der vorangegangenen Ansprüche,
**dadurch gekennzeichnet, dass**
die Funktionsfenster (20) ein- und ausblendbare Funktionsfenster (28) und/oder nicht ein- und ausblendbare Funktionsfenster (26) sind.

17. Landwirtschaftliche Arbeits- oder Erntemaschine nach Anspruch 14,
**dadurch gekennzeichnet, dass**
das wenigstens eine Funktionsfenster (20) in Abhängigkeit von an sich bekannten Maschinen- und/oder Emtegutparametem ein- und ausgeblendet werden.

18. Landwirtschaftliche Arbeits- oder Erntemaschine nach einem oder mehreren der Ansprüche 15 oder 16,
**dadurch gekennzeichnet, dass**
das Funktionsfenster (20) selbsttätig ein- und ausgeblendet wird.

## Claims

1. An agricultural working machine (1, 2) comprising at least one working assembly (3) and a driving cab (17) in which a plurality of machine and/or crop material parameters placed in different function windows are displayed by way of an electronic basic display surface (19) represented in at least one display unit (8) and wherein at least one display unit (8) is associated with the at least one working assembly (3),
**characterised in that**
the opening of at least one further function window (25) leads to the scaling of an opened function window (20) by the basic display surface (19) being scaled in such a way that a free space (24) for additional function windows (25) is created at least in part around the basic display surface (19).

2. An agricultural working or harvesting machine according to claim 1 **characterised in that** the opening of a further function window (25) and the scaling of an opened function window (20) is implemented without information loss.

3. An agricultural working or harvesting machine according to one or more of the preceding claims **characterised in that** scaling of a function window (20) is effected dynamically.

4. An agricultural working or harvesting machine according to one or more of the preceding claims **characterised in that** scaling of a function window (20) is limited to a minimum size.

5. An agricultural working or harvesting machine according to one or more of the preceding claims **characterised in that** the closure of a further function window (20) leads to the enlargement of at least one opened function window (20).

6. An agricultural working or harvesting machine according to one or more of the preceding claims **characterised in that** the at least one function window (20) is automatically scaled when an established threshold value associated with the respective function window (20) is exceeded.

7. An agricultural working or harvesting machine according to one or more of the preceding claims **characterised in that** the at least one function window (20) is automatically scaled when the value falls below an established threshold value associated with the respective function window (20).

8. An agricultural working or harvesting machine according to claim 6 and/or claim 7 **characterised in that** the threshold values include machine-specific, crop material-specific values and/or the scaling factor for the function windows (20).

9. An agricultural working or harvesting machine according to claim 6 and/or claim 7 and/or claim 8 **characterised in that** a threshold value is the critical working condition of at least one working assembly (3).

10. An agricultural working or harvesting machine according to one or more of the preceding claims **characterised in that** the per se known machine and/or crop material parameters stored in the function windows (20) are actuable.

11. An agricultural working or harvesting machine according to one or more of the preceding claims **characterised in that** the function windows (20) are subdivided into working groups.

12. An agricultural working or harvesting machine according to claim 11 **characterised in that** the working groups involve machine-specific or crop material-specific parameters.

13. An agricultural working or harvesting machine according to one or more of the preceding claims **characterised in that** scaling, opening and/or closing of the function windows (10) is effected in working group-dependent relationship.

14. An agricultural working or harvesting machine according to one or more of the preceding claims **characterised in that** the scaling operation, opening and/or closing is effected automatically or manually.

15. An agricultural working or harvesting machine according to one or more of the preceding claims **characterised in that** a plurality of working assemblies (3) are associated with a plurality of display units (8) and the plurality of display units (8) are represented in a common display unit (8).

16. An agricultural working or harvesting machine according to one or more of the preceding claims **characterised in that** the function windows (20) are function windows (28) which can be cut in and out and/or function windows (26) which cannot be cut in and out.

17. An agricultural working or harvesting machine according to claim 14 **characterised in that** the at least one function window (20) is cut in and out in dependence on per se known machine and/or crop material parameters.

18. An agricultural working or harvesting machine according to one or more of claims 15 and 16 **characterised in that** the function window (20) is automatically cut in and out.

## Revendications

1. Machine agricole de travail (1, 2) comportant au moins un organe de travail (3) et une cabine de conduite (17), dans laquelle à l'aide d'une surface d'affichage de base (19) électronique représentée dans au moins une unité d'affichage (8), plusieurs paramètres appliqués de machine et/ou de produit récolté sont visualisés dans différentes fenêtres de fonction, au moins une unité d'affichage (8) étant associée à l'organe de travail (3) au nombre d'au moins un, **caractérisée par le fait que** l'ouverture d'au moins une fenêtre de fonction (25) supplémentaire conduit à l'échelonnement de l'affichage d'une fenêtre de fonction (20) ouverte, la surface d'affichage de base (19) étant échelonnée de manière telle que soit créé autour de la surface d'affichage de base (19), au moins partiellement, un espace libre (24) pour une fenêtre de fonction (25) supplémentaire.

2. Machine agricole de travail ou de récolte selon la revendication 1, **caractérisée par le fait que** l'ouverture d'une fenêtre de fonction (25) supplémentaire et l'échelonnement de l'affichage d'une fenêtre de fonction (20) ouverte ont lieu sans perte d'informations.

3. Machine agricole de travail ou de récolte selon une ou plusieurs des revendications précédentes, **caractérisée par le fait que** l'échelonnement de l'affichage d'une fenêtre de fonction (20) a lieu de manière dynamique.

4. Machine agricole de travail ou de récolte selon une ou plusieurs des revendications précédentes, **caractérisée par le fait que** l'échelonnement de l'affichage d'une fenêtre de fonction (20) est limité à une taille minimale.

5. Machine agricole de travail ou de récolte selon une ou plusieurs des revendications précédentes, **caractérisée par le fait que** la fermeture d'une autre fenêtre de fonction (20) entraîne l'agrandissement d'au moins une fenêtre de fonction (20) ouverte.

6. Machine agricole de travail ou de récolte selon une ou plusieurs des revendications précédentes, **caractérisée par le fait que** la fenêtre de fonction (20), au nombre d'au moins une, au-delà d'une valeur seuil déterminée associée à la fenêtre de fonction (20) concernée est échelonnée de manière automatique.

7. Machine agricole de travail ou de récolte selon une ou plusieurs des revendications précédentes, **caractérisée par le fait que** la fenêtre de fonction (20), au nombre d'au moins une, en-deçà d'une valeur seuil déterminée associée à la fenêtre de fonction (20) concernée est échelonnée de manière automatique.

8. Machine agricole de travail ou de récolte selon la des revendication 6 et/ou la revendication 7, **caractérisée par le fait que** les valeurs seuil comprennent des valeurs spécifiques de la machine, des valeurs spécifiques du produit récolté et/ou le facteur de décalage pour la fenêtre de fonction (20).

9. Machine agricole de travail ou de récolte selon la des revendication 6 et/ou la revendication 7 et/ou la revendication 8, **caractérisée par le fait qu'**une valeur seuil est l'état de travail critique d'au moins un organe de travail (3).

10. Machine agricole de travail ou de récolte selon une ou plusieurs des revendications précédentes, **caractérisée par le fait que** les paramètres de machine et/ou de récolte affichés dans les fenêtres de fonction (20) et connus en eux-mêmes sont des valeurs à atteindre.

11. Machine agricole de travail ou de récolte selon une ou plusieurs des revendications précédentes, **caractérisée par le fait que** les fenêtres de fonction (20) sont subdivisées en groupes de travail.

12. Machine agricole de travail ou de récolte selon une ou plusieurs des revendications précédentes, **caractérisée par le fait que** les groupes de travail mesurent des paramètres spécifiques de la machine ou spécifiques du produit récolté.

13. Machine agricole de travail ou de récolte selon une ou plusieurs des revendications précédentes, **caractérisée par le fait que** l'échelonnement, l'ouverture et/ou la fermeture des fenêtres de fonction (20) ont lieu en fonction de groupes de travail.

14. Machine agricole de travail ou de récolte selon une ou plusieurs des revendications précédentes, **caractérisée par le fait que** l'échelonnement, l'ouverture et/ou la fermeture ont lieu de manière automatique ou manuellement.

15. Machine agricole de travail ou de récolte selon une ou plusieurs des revendications précédentes, **caractérisée par le fait que** plusieurs organes de travail (3) sont associés à plusieurs unités d'affichage (8) et que la pluralité d'unités d'affichage (8) est représentée dans une unité d'affichage (8) commune.

16. Machine agricole de travail ou de récolte selon une ou plusieurs des revendications précédentes, **caractérisée par le fait que** les fenêtres de fonction (20) sont des fenêtres de fonction (28) de type surgissantes et/ou des fenêtres de fonction (26) de type non surgissantes.

17. Machine agricole de travail ou de récolte la revendication 14, **caractérisée par le fait que** la fenêtre de fonction (20), au nombre d'au moins une, est affichée et masquée en fonction de paramètres spécifiques de la machine et/ou spécifiques du produit récolté connus.

18. Machine agricole de travail ou de récolte selon une ou plusieurs des revendications 15 ou 16, **caractérisée par le fait que** la fenêtre de fonction (20) est affichée et masquée automatiquement.
